# EUROPÄISCHE PATENTSCHRIFT

(11) **EP 2 104 884 B1**
(45) Veröffentlichungstag und Bekanntmachung des Hinweises auf die Patenterteilung: **14.10.2015**
(21) Anmeldenummer: 07866216.0
(22) Anmeldetag: 11.12.2007
(51) Int. Cl.: G03H 1/02, G03H 1/20, G03H 1/30

(54) **VERFAHREN ZUR HERSTELLUNG EINES HOLOGRAPHISCHEN SICHERHEITSELEMENTES MIT EINFARBIGEN PIXELN**
METHOD OF MANUFACTURING A HOLOGRAPHIC SECURITY ELEMENT WITH SINGLE-COLOURED PIXELS
PROCÉDÉ DE FABRICATION D'UN ÉLÉMENT DE SÉCURITÉ HOLOGRAPHIQUE AVEC PIXELS MONOCHROMES

(30) Priorität: 20.12.2006 DE 102006061220
(43) Veröffentlichungstag der Anmeldung: 30.09.2009
(73) Patentinhaber: Bundesdruckerei GmbH, 10958 Berlin (DE)
(72) Erfinder: LEOPOLD, André, 10119 Berlin (DE); KUNATH, Christian, 12203 Berlin (DE); PASCHKE, Manfred, 16352 Basdorf (DE)
(74) Vertreter: Jungblut, Bernhard Jakob
(86) Internationale Anmeldenummer: PCT/DE2007/002262
(87) Internationale Veröffentlichungsnummer: WO 2008/074306

(56) Entgegenhaltungen:
- GB-A- 2 214 651
- JP-A- 7 084 505
- US-A- 6 127 066

## Beschreibung

### Gebiet der Erfindung.

Die Erfindung betrifft ein Verfahren zur Herstellung eines holographischen Sicherheits-elementes mit einem mehrfarbigen zweidimensionalen Muster in Form eines Hologramms, wobei das Muster durch Pixel gebildet ist, für ein Sicherheits- und/oder Wertdokument.

### Hintergrund der Erfindung und Stand der Technik.

Sicherheitselemente dienen dazu, ein Sicherheits- und/oder Wertdokument gegen Fälschung oder Kopieren zu sichern. In Sicherheitselementen sind oftmals auch individualisierende Angaben, beispielsweise Seriennummer, Ausweisnummer, biometrische Daten, Bilder (Passbilder), etc., enthalten. Diese können in Klarschrift bzw. Bildform oder optisch codiert bzw. maschinenlesbar vorgesehen sein.

Das grundsätzliche Vorgehen bei der Herstellung von Hologrammen mit individualisierenden Angaben ist beispielsweise in der Literaturstelle EP 0 896 260 A2 beschrieben. Die Grundzüge werden folgend kurz erläutert. Zunächst wird ein Holographie-Master mit einem Masterhologramm hergestellt. Dann wird der Holographie-Master hinter einen Holographie Recordable Film positioniert, beispielsweise in flächigem Kontakt, ggf. getrennt durch eine Schutzfolie. Kohärentes Licht, beispielsweise aus einem Laser, wird auf die dem Holographie-Master abgewandte Seite des Holographic Recordable Films eingestrahlt, typischerweise mit definierter Wellenlänge und definiertem Inzidenzwinkel, nach Maßgabe des vom Holographie-Master zu rekonstruierenden holographischen Musters. Es durchdringt den Holographie Recordable Film und wird vom Master gebeugt bzw. reflektiert, wobei sich das Hologramm durch Interferenz mit dem einfallenden Licht rekonstruiert und das Hologramm in dem Holographie Recordable Film abbildet und speichert durch photochemische oder photophysikalische Prozesse im Holographie Recordable Film. Dabei kann der Holographie-Master so ausgelegt sein, dass er für mehrere Wellenlängen empfindlich ist und diese entsprechend beugt.

Bei dem insofern bekannten Verfahren erfolgt eine farbige Belichtung unter Verwendung eines farbigen Spatial Light Modulators unter Beleuchtung mit einem Weißlichtlaser bzw. mit drei verschiedenfarbigen Lasern im üblichen Farbdreieck. Zur Herstellung eines Hologrammes mit einem farbig rekonstruierenden Holographie-Master erfolgt eine vollflächige Belichtung oder Belichtung mit einem Scanstrahl, wobei die Belichtung in geeigneter Weise moduliert wird, wie beispielsweise beim pixelweisen Schreiben oder linienweisem Schreiben. Das insofern bekannte Verfahren ist in der Ausführung komplex und benötigt entsprechend farbig modulierbare Spatial Light Modulatoren. Zudem ist die Beugungseffizienz pro Wellenlänge eher niedrig auf Grund der Überlagerung verschiedener Farben des Farbdreiecks an ein und denselben Orten bzw. in den Pixeln des Hologramms.

Die Herstellung farbiger Hologramme ist des Weiteren beispielsweise aus der Literaturstelle EP 0 715 232 A2 bekannt. Es gelten die vorstehend genannten Nachteile analog.

Aus der Praxis sind digitale Projektoren bekannt, welche mit Spatial Light Modulatoren in Form von Liquid Crystal Displays (LCD) arbeiten. Die Funktionsweise entspricht der Projektion eines Dias, wobei der Spatial Light Modulator an Stelle des Dias tritt. In einer Variante werden an Stelle eines einzigen LCD drei LCDs verwendet, wobei jedes LCD einer andern Grundfarbe zugeordnet ist und die farbigen Teilbilder über ein speziell angeordnetes Projektionssystem, beispielsweise mit dichroitischen Spiegeln, zu einem farbigen Bild zusammengefügt werden.

Aus der Praxis sind des Weiteren digitale Projektoren bekannt, welche ein DMD (Digital Micromirror Device) als Spatial Light Modulator umfassen. Das DMD wird sequentiell mit Teilbildern der jeweiligen Grundfarbe angesteuert und dem DMD ist ein rotierendes Farbrad mit abwechselnden Farbsegmenten in den Grundfarben nachgeschaltet. Dabei ist die Ansteuerung des DMD mit Teilbildern mit der Rotationsbewegung des Farbrades mit der Maßgabe synchronisiert, dass das DMD stets mit jenem Teilbild angesteuert wird, welches der Farbe des im Strahlengang befindlichen Farbsegmentes entspricht. Die Frequenz der Farbwechsel im Farbrad ist dabei ausreichend hoch, so dass das menschliche Auge keine Teilbilder unterscheiden kann, sondern die Teilbilder zu einem Gesamtbild zusammenfügt. In einer Variante wird mit drei DMDs, jeweils für eine Grundfarbe, gearbeitet, welche mit mit der jeweiligen Grundfarbe zugeordneten Teilbildern angesteuert werden. Ein Gesamtbild wird durch geeignete Optiken, beispielsweise Prismen, aus den Teilbildern gebildet.

Ebenfalls aus der Praxis sind Prototypen von Laserprojektoren bekannt, wobei das Licht von drei Lasern der drei Grundfarben mittels rotierender Spiegelräder, analog einem Elektronenstrahl einer Bildröhre, zeilenweise über eine Projektionsfläche gescannt wird.

Aus der Literaturstelle DE 10 2005 054 396 A1 ist der Einsatz eines Spatial Light Modulators in Form eines Digital Micro Mirror Device (DMD) zur Markierung von Gegenständen bekannt.

Allen dieser Verfahren, würden sie auf eine Belichtung zur Herstellung farbiger Hologramme angewandt, wären ebenfalls mit dem Nachteil behaftet, dass die Beugungseffizienz pro Wellenlänge eher niedrig ist auf Grund der Überlagerung verschiedener Farben des Farbdreiecks an ein und denselben Orten bzw. in den Pixeln des Hologramms.

Das Patent US 6 127 066 zeigt in Fig. 20(a) ein Hologramm, welches aus einer zweidimensionalen Matrix von Hologramm-Pixeln besteht, die mit unterschiedlichen Farben (R, G, B) zu rekonstruieren sind. Die Patentschrift verweist ferner auf Anwendungsmöglichkeiten der darin offenbarten Hologramme zur Fälschungssicherung.

Die Offenlegungsschrift JP H7-84505, welche den nächsten Stand der Technik für den Gegenstand von Anspruch 1 darstellt, offenbart ein Herstellungsverfahren für Hologramme, welche aus einer zweidimensionalen Anordnung von Hologramm-Pixeln bestehen, die mit unterschiedlichen Farben (R, G, B) zu rekonstruieren sind. Hierbei wird holografischer Master über sukzessiv anzuwendende Schattenmasken, welche die einzelnen Pixelbereiche definieren, in einen holografischen Film kopiert. Der Film wird anschließend nachbehandelt, um die gewünschte Rekonstruktionswellenlänge der jeweiligen Hologramm-Pixel (R, G, B) einzustellen.

### Technisches Problem der Erfindung

Der Erfindung liegt daher das technische Problem zu Grunde, ein verbessertes Herstellungsverfahren für ein farbiges holographisches Sicherheitselement zu schaffen.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheits- und/oder Wertdokument verbunden, beispielsweise verklebt werden kann, es kann sich aber auch um einen integralen Bestandteil eines Sicherheits- und/oder Wertdokumentes handeln. Ein Beispiel für erstes ist ein auf ein Sicherheits- und/oder Wertdokument aufklebbares Visum. Ein Beispiel für letzteres ist ein in einen Geldschein oder einen Ausweis integriertes, beispielsweise einlaminiertes Hologramm.

Ein Sicherheitsmerkmal ist eine Struktur, die nur mit (gegenüber einfachem Kopieren) erhöhtem Aufwand oder gar nicht unauthorisiert herstellbar bzw. reproduzierbar ist.

Ein Muster besteht typischerweise aus einer Vielzahl nebeneinander angeordneter Mustereinheiten bzw. Pixel. Die Mustereinheiten bzw. Pixel eines Muster sind einander zugeordnet und in definierter Weise lateral zueinander angeordnet, typischerweise in zwei Raumdimensionen und ergeben in der Gesamtbetrachtung eine Darstellung, beispielsweise ein Bild, Symbol, Logo, Schriftzug (Buchstaben, Zahlen, alphanumerisch), oder Code (z.B. Barcode).

Im Rahmen der Terminologie der vorliegenden Darstellung der Erfindung ist der Begriff des Pixels im Rahmen eines Hologramms modifiziert verwendet. Während im Stand der Technik und der vorstehenden Beschreibung hierzu ein einziges Pixel jede beliebige Farbe, die sich aus den drei Grundfarben bilden läßt, haben kann, kann ein isoliertes Pixel im Rahmen der Erfindung nur eine einzige Farbe, nämlich die dem jeweiligen Pixel zugeordnete Grundfarbe, aufweisen. Bezogen auf die Terminologie des Standes der Technik wäre ein Pixel im Sinne der Erfindung ein Subpixel und der Ausdruck des Pixels wird für die Erfindung zum Zwecke der Vereinfachung verwendet. Ein Farbeindruck entsteht im Rahmen der Erfindung dadurch, dass die Dichte der erfindungsgemäßen Pixel so hoch ist, dass das menschliche Auge sie nicht unterscheiden kann und folglich aus unterschiedlichen Beugungseffizienzen bzw. "Helligkeiten" benachbarter Pixel mit verschiedenen Grundfarben die in dem betreffenden Bereich des Hologramms darzustellende Farbe gleichsam mischt. Ein erfindungsgemäßes Pixel hat eine Fläche von typischerweise im Bereich 1 µm² bis 10⁶ µm², insbesondere 10² µm² bis 10⁵ µm².

Die Abwesenheit von Farbe meint, dass keine Farbe erkennbar ist. Ein erfindungsgemäßes Pixel, worin eine Farbe abwesend ist, kann beispielsweise schwarz, grau, weiss, oder transparent sein.

Suprapixel im Sinne der Erfindung sind Teilbereiche eines Musters, beispielsweise eine n x n oder n x m Matrix, welche Pixel verschiedener Farben enthalten, wodurch durch Steuerung der Pixel verschiedener Farben bei Betrachtung mit dem menschlichen Auge Mischfarben entstehen. Im Rahmen eines Suprapixels können sich die Pixel durch die erzeugte Beugungseffizienz und so durch eine "Helligkeit" bei Betrachtung unterscheiden, wodurch eine Modulation der Helligkeit der betreffenden Grundfarbe des Pixels möglich ist. Wenn ohne Zwischenstufen der Beugungseffizienz zwischen maximal und minimal gearbeitet wird, können g = p + 1 Helligkeitsstufen der betreffenden Grundfarbe erzeugt werden, wobei p die Anzahl der Pixel einer Farbe eines Suprapixels ist. Selbstverständlich kann aber auch zusätzlich die Beugungseffizienz eines Pixels in Zwischenstufen zwischen maximal und minimal variiert werden, wodurch die Anzahl der Helligkeitsstufen der betreffenden Grundfarbe des erfindungsgemäßen Suprapixels sich entsprechend erhöht.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage.

Ein Spatial Light Modulator (SLM) erlaubt eine zweidimensional ortsaufgelöste Beleuchtung bzw. Bestrahlung eines meist flächigen Gegenstandes mit modulierter Intensität. Hierbei kann es sich beispielsweise um einen DMD (Digital Micromirror Device) Chip, ein LCD (Liquid Crystal Display) Transmissiondisplay, oder ein LCOS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen. Durch die freie Ansteuerbarkeit können auch ohne Weiteres verschiedene Bilder oder Muster in zeitlicher Folge hintereinander generiert werden, beispielsweise in Form eines Passfotos.

Ein Code bzw. Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldscheine individualisierender Code ist die Wertigkeit. Für einen Geldschein individualisierend ist die Seriennummer. Beispiele für nicht individualisierende Codes bzw. Muster sind Wappen, Siegel, Hoheitszeichen, etc.

Ein Holographic Recordable Film ist eine Schicht aus einem Material, welches photosensitiv ist, und in welcher sich Holographien durch irreversible, aber auch reversible photochemische und/oder photophysikalische Prozesse im Wege der Belichtung speichern lassen. Im Rahmen der Erfindung ist das eingesetzte Material irrelevant. Alle bekannten Materialien können eingesetzt werden, so dass auf die Fachliteratur des Durchschnittsfachmannes verwiesen werden kann. Lediglich beispielhaft seien die in der Holographie üblichen Photopolymere genannt.

Der Begriff der Farbe wird im Rahmen der Erfindung als eine Wellenlänge bzw. eine Spektrallinie verstanden. Mischfarben weisen mehrere verschiedene Wellenlängen bzw. Spektrallinien auf. Der Begriff der Farbe umfasst daher neben dem sichtbaren Bereich auch UV und IR.

### Grundzüge der Erfindung und bevorzugte Ausführungsformen.

Zur Lösung des vorstehenden technischen Problems lehrt die Erfindung ein Verfahren zur Herstellung eines holographischen Sicherheitselementes mit einem Holographic Recordable Film, in welchem ein mehrfarbiges zweidimensionales Muster in Form eines Hologramms gebildet ist, wobei das Muster durch Pixel gebildet ist, wobei jedem Pixel ausschließlich eine von mehreren Farben zugeordnet ist, und wobei ein jedes Pixel entweder die Farbe oder keine Farbe aufweisen kann, wie es in Anspruch 1 definiert ist.

Mit anderen Worten ausgedrückt, wird ein "normales" Pixel, welches durch Mischung der Grundfarben jede beliebige Farbe annehmen kann, in eine Mehrzahl diskreter erfindungsgemäßer Pixel aufgelöst, wobei die diskreten Pixel jeweils nur eine einzige Farbe aufweisen können oder die Abwesenheit von Farbe. Es versteht sich, dass im Falle der Anwesenheit von Farbe deren Beugungseffizienz und so die scheinbare Helligkeit variieren kann, wobei die Farbe an sich unverändert bleibt.

Dadurch wird erreicht, dass die Beugungseffizienz eines Pixels für die zugeordnete Wellenlänge erhöht ist, da innerhalb eines Pixels keine Überlagerung verschiedener Farben stattfindet.

Im Einzelnen bestehen verschiedene Möglichkeiten der Weiterbildung. Beispielsweise ist jedem Pixel jeweils eine von mehreren, insbesondere drei, verschiedenen (Grund-) Farben, beispielsweise ausgewählt aus der Gruppe bestehend aus "rot, grün und blau", zugeordnet.

Grundsätzlich kann die zweidimensionale Verteilung der Pixel beliebig sein. In der Praxis wird es sich vorteilhafterweise jedoch um eine sich periodisch in beiden Dimensionen wiederholende n x n oder n x m Matrix handeln, wobei n und m unabhängig voneinander im Bereich von 2 bis 20, insbesondere von 3 bis 10, liegen können. Beispiele sind neben 3 x 3 und 9 x 3, wie in den Beispielen dargestellt, 4 x 5 bzw. 5 x 4 und 5 x 5 Matrices. Eine periodische Verteilung meint, dass die Matrix bzw. deren Farbzuordnung sich in beiden Dimensionen wiederholt. Die Matrix stellt insofern eine Repetitionseinheit dar. Dabei kann die Anzahl z der Pixel einer jeweiligen Farbe innerhalb der Matrix grundsätzlich nicht gleichmäßig verteilt sein. In einer Variante ist es allerdings bevorzugt, wenn eine, bezogen auf die Anzahl, exakt gleichmäßige Verteilung oder optimal angenähert gleichmäßige Verteilung innerhalb der Matrix vorliegt. In letzterem Fall läßt sich z im wesentlichen sich nach der Formel z = |n x m / f| berechnen, wobei f die Anzahl verschiedener Farben ist, und wobei aus der Differenz von z x f und n x m bzw. m x m resultierende Pixel einer oder mehreren verschiedenen der f Farben zugeordnet wird. Beispielsweise in einer 5 x 5 Matrix mit drei Farben ergäben sich für die erste und die zweite Farbe 8 Pixel und für die dritte Farbe 9 Pixel. Analog ergäben sich bei einer 4 x 5 Matrix für die erste und die zweite Farbe 7 Pixel und für die dritte Farbe 6 Pixel. Bei einer 3 x 3 Matrix wären 3 Pixel für jede Farbe eingerichtet.

Es sei jedoch angemerkt, dass ein Suprapixel keineswegs als quadratische oder rechteckige Matrix ausgebildet zu sein braucht. Für Suprapixel kommt beispielsweise auch eine kreisförmige oder dreieckige Umfangsgestalt in Frage, wobei innerhalb des Suprapixels analog den vorstehenden Ausführungen die Pixel der verschiedenen Farben vorzugsweise möglichst gleichmäßig verteilt sind. Beispielsweise kann ein Suprapixel auch durch 3 Pixel mit jeweils verschiedener Grundfarbe gebildet sein, wobei die Pixel an den Ecken eines gleichschenkligen Dreiecks angeordnet sind.

Die räumliche Verteilung der Pixel verschiedener Farben innerhalb der Matrix ist insbesondere bei kleinen Pixeln beliebig, da das menschliche Auge, jedenfalls bei oberflächlicher Betrachtung, die einzelnen Pixel einer Matrix nicht auflösen, sondern vielmehr eine Matrix als ein einzelnes Suprapixel wahrnehmen wird, sofern nicht ohnehin eine separate bzw. diskrete Wahrnehmung der Suprapixel auch nicht stattfindet aufgrund der geringen Größe der Matrix insgesamt.

Die Form eines Pixels kann grundsätzlich beliebig sein, beispielsweise kreisförmig. Bevorzugt ist es jedoch, wenn die bzw. alle Pixel im wesentlichen die Form eines Quadrates mit der Seitenlänge A oder eines Rechtecks mit den Seitenlängen A und B aufweisen. A und B können unabhängig voneinander im Bereich von 1 µm bis 1000 µm, insbesondere 10 µm bis 300 µm, liegen.

Im Falle rechteckiger Pixel gleicher Farbe können diese beispielsweise ein Seitenverhältnis von im wesentlichen A : A/z aufweisen und so unmittelbar nebeneinander und gleich orientiert angeordnet sein, dass ein Quadrat mit einer Seitenlänge A gebildet wird. z ist dann die Anzahl der unmittelbar nebeneinander angeordneten Pixel gleicher Farbe. Dann würde durch die rechteckigen Pixel gleicher Farbe innerhalb der Matrix eine 1 x z bzw. z x 1 Submatrix gebildet werden. z kann 2 bis 10, beispielsweise 3, sein.

Unabhängig von der Anordnung zueinander erlaubt es eine rechteckige Form eines Pixels, dessen Abmessungen zu optimieren bzw. zu minimieren, da die minimal erreichbaren Abmessungen für Pixel in den beiden Raumrichtungen x und y (in der Ebene des Holographic Recordable Films) beim Masterkopierprozess unterschiedlich sein können. Dies ist beispielsweise der Fall, wenn die Mattscheibe eines Masters so konstruiert ist, dass unter einem bestimmten Winkel, z.B. 45°, aus y-Richtung einfallendes Licht senkrecht zum Master, also 90°, reflektiert wird und umgekehrt. Da der Abstand zwischen Holographic Recordable Film und Master in der Praxis meist nicht null ist auf Grund zwischengelegter Schutzfolien oder dergleichen, ist in beschriebenen Fall eine minimale Größe des Pixels vorgegeben und definiert durch die notwendige Interferenz zwischen einfallendem Licht und vom Master (rück-) gebeugtem Licht (Master und Lichtquelle liegen meist auf entgegengesetzten Seiten des Holographic Recordable Films). Je größer der Abstand zwischen Master und Holographic Recordable Film, um so größer ist die minimale Größe des Pixels in y-Richtung, wie eine einfache Betrachtung der Strahlenganggeometrie ergibt. Im vorstehenden Beispiel mit den angegebenen Winkeln besteht eine solche Restriktion in x-Richtung nicht. Es versteht sich, dass die jeweiligen Bedingungen von den Winkelverhältnissen abhängen, wobei der Fachmann dies leicht anhand der Strahlenganggeometrie unter Berücksichtigung der Winkel erkennen und berechnen kann. Grundsätzlich werden dann die Pixel mit der Maßgabe parallel zueinander orientiert, dass deren längere Symmetrieachse parallel zu jener Raumrichtung liegt, in welcher auf Grund von Einstrahlungswinkel und Beugungswinkel eine maximale Mindesterstreckung eines Pixels gegeben ist.

Helligkeitsstufen bzw. Graustufen eines Pixels können beispielsweise dadurch eingerichtet werden, dass die Energiedosis der Belichtung einen Bruchteil der Energiedosis beträgt, welcher für die Erzielung einer maximalen Beugungseffizienz in dem verwendeten Holographic Recordable Film notwendig ist. Abwesenheit von Farbe ist dann durch eine Beugungseffizienz von praktisch 0% der maximal erreichbaren Beugungseffizienz definiert. Anwesenheit von Farbe ist folglich eine Beugungseffizienz von mehr als 0%, vorzugsweise mehr als 10% der maximal erreichbaren Beugungseffizienz definiert. Grundsätzlich lassen sich alle Zwischenwerte zwischen 0% und 100% der maximal erreichbaren Beugungseffizienz einstellen, wobei in der Praxis eine begrenzte Anzahl diskreter Zwischenwerte, beispielsweise 1 bis 10 Zwischenwerte zwischen den beiden Grenzwerten (ergibt 3 bis 12 verschiedene diskrete Werte) vorgesehen sein kann. Die jeweils gewünschte Beugungseffizienz kann der Durchschnittsfachmann unschwer unter Berücksichtigung des verwendeten Holographic Recordable Films durch Einstellung von Dauer und/oder Intensität der Belichtung des Pixels einstellen.

Eine alternative (oder zusätzliche) Methode der Einstellung von Helligkeits- bzw. Grauwerten kann dadurch erfolgen, dass unterschiedliche Anzahlen der Pixel gleicher Farbe eines Suprapixels aktiviert werden (farbig mit einer bestimmten Beugungseffizienz, beispielsweise der maximalen Beugungseffizienz) oder deaktiviert sind. Damit können verschiedene Helligkeitsstufen realisiert werden, deren Anzahl durch die Anzahl der Pixel innerhalb eines Suprapixels bestimmt ist und g = p +1 , mit p als der Anzahl der Pixel eines Suprapixels, beträgt. Diese Form weist als Vorteil auf, dass für den Holographic Recordable Film auch Materialien mit stark nicht-linearem Verhalten der Beugungseffizienz als Funktion der Energiedosis verwendet werden können, bei welchen sich ansonsten die Einstellung von Helligkeitsstufen bzw. Graustufen über die eingestrahlte Energiedosis, wie vorstehend beschrieben, schwierig gestalten würde.

Es ist alternativ oder zusätzlich zu der Zuordnung einer Farbe oder keiner Farbe zu einem Pixel möglich, dass den Pixeln jeweils eine definierte und vorgegebene Helligkeit und/oder Graustufe (von schwarz bis weiss) zugeordnet bzw. im Rahmen der Pixel eingerichtet wird. Dadurch können beispielsweise Suprapixel in Graustufen geschaffen werden durch Auswahl und Einrichtung der Helligkeiten bzw. Graustufen der Pixel des betreffenden Suprapixels.

In dieser Variante kann das zweidimensionale Muster also auch nur in schwarz/weiss, d.h. nicht-farbig, gebildet sein. Ansonsten finden die vorstehenden und nachfolgenden Ausführungen analog Anwendung.

Ein Sicherheitselement kann zur Herstellung eines Sicherheits- und/oder Wertdokumentes verwendet werden, wobei das Sicherheitselement auf oder in dem Sicherheits- und/oder Wertdokument appliziert oder hierauf oder hierin gebildet wird, sowie ein solches Sicherheits- und/oder Wertdokument selbst. Eine Applikation auf einem Sicherheits- und/oder Wertdokument kann beispielsweise durch Aufkleben erfolgen. Eine Applikation in einem Sicherheits- und/oder Wertdokument kann beispielsweise durch Einlaminieren erfolgen. Eine Bildung in einem Sicherheits- und/oder Wertdokument kann beispielsweise gemäß der Literaturstelle DE 10 2004 053 367 A1 erfolgen, wobei der Holographic Recordable Film im Volumen des Substrates angeordnet ist.

Ein Sicherheitselement kann erfindungsgemäß auf verschiedene Weisen hergestellt werden. Folgend werden einige Beispiele für Herstellungsverfahren näher erläutert.

In den Grundzügen ist allen folgend beschriebenen Verfahren zur Herstellung eines Sicherheitselementes oder Sicherheits- und/oder Wertdokumentes gemeinsam, dass mit den folgenden Verfahrensschritten gearbeitet wird: a) ein farbiges Muster, beispielsweise ein Bild, wie ein Passfoto, wird in eine zweidimensionale Matrix aus Pixeln transformiert, wobei jedem Pixel ausschließlich eine Farbe von f verschiedenen Farben zugeordnet ist, b) aus der zweidimensionalen Pixelmatrix werden f Teilbilder erzeugt, wobei jedes Teilbild optional zumindest zwei Referenzpixel aufweist, welche in verschiedenen Teilbildern stets deckungsgleich sind, und wobei jedes Teilbild nur eine der f Farben aufweist, c) die Teilbilder aus der Stufe b) werden in Modulatorsignale für zumindest einen Spatial Light Modulator transformiert, d) ein Holographic Recordable Film wird über zumindest einen Holographie-Master durch Zwischenschaltung des mit dem Signal aus Stufe c) modulierten Spatial Light Modulators mit den Teilbildern belichtet, wobei die Belichtung für jedes Teilbild mit kohärentem Licht der dem Teilbild zugeordneten Farbe erfolgt, und wobei optional die Referenzpixel aller Teilbilder deckungsgleich abgebildet werden. Referenzpixel werden benötigt, wenn mit mehreren verschiedenen Spatial Light Modulatoren, beispielsweise für jeweils eine Farbe, gearbeitet wird. Dann wird vorzugsweise jedes Teilbild drei Referenzpixel aufweisen. Sofern mit einem einzigen Spatial Light Modulator gearbeitet wird, sind Referenzpixel nicht erforderlich.

Die Transformation eines farbigen Musters, beispielsweise eines Bildes, in eine zweidimensionale Matrix kann beispielsweise analog der Aufnahme und der Verarbeitung eines farbigen Fernsehbildes erfolgen. Die so erzeugten einfarbigen Teilbilder müssen zueinander orientiert und angeordnet sein, da nur bei richtiger Deckung wieder das farbige Muster bzw. Bild erzeugt wird. Hierzu dienen erforderlichenfalls die Referenzpixel. Zwei Referenzpixel, besser drei, werden für eine mathematisch eindeutige Zuordnung von Orientierung und Anordnung benötigt. Wird beispielsweise eine Referenzkante verwendet, so ist dies gleichbedeutend mit der Verwendung einer Anzahl von Referenzpixel, die der Anzahl der entlang der Referenzkante angeordnen Pixel entspricht.

In einer ersten Form des Verfahrens erfolgt die Belichtung des Holographic Recordable Films mit den Teilbildern sequentiell. Hierbei wird grundsätzlich nacheinander kohärentes Licht der verschiedenen Farben erzeugt und auf den Spatial Light Modulator geworfen, wobei der Spatial Light Modulator jeweils mit den den einfallenden Farben zugeordneten Teilbilder synchron angesteuert wird.

Im einfachsten Fall erfolgt die Belichtung mit allen Teilbildern durch einen einzigen Spatial Light Modulator. Zunächst wird eine Lichtquelle, beispielsweise bestehend aus mehreren Lasern verschiedener Farben, für eine erste Farbe aktiviert und zugleich oder zuvor wird der Spatial Licht Modulator mit dem der ersten Farbe zugeordneten Teilbild angesteuert. Nach einer definierten Zeitspanne der Belichtung wird die Lichtquelle deaktiviert bzw. der Spatial Light Modulator abgeschattet. Dieser Vorgang wiederholt sich dann für eine zweite Farbe mit zugeordnetem Teilbild und der dritten Farbe mit zugeordnetem Teilbild. Die jeweilige Belichtungsdauer bzw. Energiedosis ist auf die gewünschte Beugungseffizienz des Holographic Recordable Films bei der betreffenden Wellenlänge abgestimmt und kann insofern unterschiedlich für die verschiedenen Farben sein.

Das Wechseln der Farbe der Lichtquelle kann dabei beispielsweise durch Shutter erfolgen, die Licht von Laser der jeweils gewünschten Farbe durchlassen und jenes der anderen Laser abschatten. Auch ist es möglich, den Betriebsstrom der Laser entsprechend zu modulieren, i.e. nur derjenige Laser erhält einen Betriebsstrom, dessen Farbe dem Teilbild zugeordnet ist, mit welchem der Spatial Light Modulator angesteuert wird. Auch sind sonstige übliche Techniken, wie mittels elektro-optischer oder akusto-optischer Modulatoren möglich.

Grundsätzlich kann auch mit der Technologie der Digitalprojektoren mit Farbrad gearbeitet werden. Hierbei handelt es sich ebenfalls im Kern um eine sequentielle Technik, auch wenn die Folge der projizierten (Teil-) Bilder periodisch und mit hoher Frequenz wiederholt wird. Die Umschaltung zwischen verschiedenen Farben erfolgt durch die Segmente des Farbrades. Mit einem Segmentwechsel ist stets ein synchroner Wechsel der Ansteuerung des Spatial Light Modulators verbunden, der mit dem dem jeweiligen Farbsegment bzw. dessen Farbe zugeordneten Teilbild angesteuert wird. Auch bei diesem Verfahren können unterschiedliche Empfindlichkeiten des Holographic Recordable Films bei unterschiedlichen Wellenlängen berücksichtigt werden. Hierzu ist es lediglich notwendig, die Segmentwinkel der verschiedenen Farbsegmente nach Maßgabe der Empfindlichkeit des Holographic Recordable Films bei der betreffenden Farbe sowie der Laserintensität der Farbe zu wählen. Benötigt man beispielsweise zum Erreichen einer gewünschten (gleichen) Beugungseffizienz bei einer Wellenlänge A 100 mJ/cm², bei einer Wellenlänge B jedoch nur 10 mJ/cm², so kann bei jeweils gleicher Laserintensität bei beiden Wellenlängen durch einen größeres Segment der Farbe B, bezogen auf das Segment der Farbe B, eine längere Belichtungzeit und so die benötigte Dosis eingestellt werden.

Es kann auch mit sequentiellen Scannen gearbeitet werden. Hierbei wird im einfachsten Falle zunächst ein einer ersten Farbe zugeordnetes Teilbild auf den Spatial Light Modulator geschaltet. Ein Lichtbalken bzw. eine Scanstrahl der betreffenden Farbe wird über den Spatial Light Modulator kontinuierlich oder in Stufen gescannt, also in einer Richtung orthogonal zur Längserstreckung des Scanstrahls, verschwenkt. Dies wiederholt sich dann für jede Farbe.

Zu den sequentiellen Verfahren gehört letztendlich auch das pixelweise Belichten des Holographic Recordable Films, analog beispielsweise den Verfahren im Laserfernsehen. Auch hier ist zu beachten, dass Pixel unterschiedlicher Farben nicht überlappen.

In einer zweiten Form des Verfahrens erfolgt die Belichtung des Holographic Recordable Films mit den Teilbildern in einem Multiplexverfahren. Hierbei werden verschiedene Teilbereiche des Spatial Light Modulators mit kohärentem Licht verschiedener Farben bestrahlt, wobei die Teilbereiche jeweils mit den hiermit korrespondierenden Teilen der den einfallenden Farben zugeordneten Teilbilder synchron angesteuert werden.

Dies läßt sich beispielsweise durch Scannen der verschiedenfarbigen Lichtstrahle über den Spatial Light Modulator durchführen. Beispielsweise kann der Spatial Light Modulator mit einem ersten Lichtbalken einer ersten Farbe bestrahlt werden, während ein lateral beabstandeter, nicht überlappender, zweiter Lichtbalken gleichzeitig mit der zweiten Farbe bestrahlt wird, usw. Die jeweiligen bestrahlten Balken des Spatial Light Modulators werden hierbei mit mit der Lage der jeweiligen Balken zugeordneten Teilen der Teilbildern, welche der betreffenden Farbe zugeordnet sind, angesteuert. Nach einer vorgegebenen Belichtungsdauer erfolgt eine nächste Belichtung, wobei die Balken mit Licht anderer Farbe bzw. andere Balken mit Licht der gleichen Farbe oder anderer Farbe bestrahlt werden (natürlich mit entsprechender Ansteuerung des Spatial Light Modulators). Dies wiederholt sich so lange, bis die gesamte Fläche des Spatial Light Modulators mit allen Farben bestrahlt worden ist. Dann ist die Belichtung abgeschlossen. Es findet in der Belichtungsfolge also gleichsam eine Verschachtelung der Belichtung verschiedener Teile verschiedener Teilbilder statt, i.e. eine gemultiplexte Belichtung.

An Stelle einer (beliebigen) Umschaltung verschiedener Belichtungsbalken kann auch mit scannenden Belichtungsbalken gearbeitet werden. Hierbei bewegt sich ein Belichtungsbalken kontinuierlich oder in diskreten Stufen in Richtungen mit einer Richtungskomponente orthogonal zur Längserstreckung des Belichtungsbalkens, beispielsweise in Richtung orthogonal hierzu, über den Spatial Light Modulator. Die Ansteuerung des Spatial Light Modulators erfolgt dabei, dass synchron mit den jeweiligen Scans eine Ansteuerung mit dem zugeordneten Teilbild erfolgt.

Im Zusammenhang mit dem Verfahren unter Einsatz eines Scanstrahles sind diverse Weiterbildungen möglich. So ist bei einem zeilenweisen (eine Zeile entspricht einem Belichtungsbalken) Abscannen mit überlappenden rot/grün/blau (RGB) Lasern ein Farbwechsel mittels eines Farbrades oder durch synchrones Ein- und Ausschalten der betreffenden Laser möglich. Die Synchronisation besteht in der Abstimmung mit dem Zeileninformationswechsel (Teilbild der Zeile in der betreffenden Farbe) mit der Aufenthaltszeit des Scanstrahles in der jeweiligen Zeile/Spalte. Dies kann beispielsweise durch genau auf die Bewegungsgeschwindigkeit des Scanstrahls abgestimmte Drehzahl eines Farbrades bzw. Schaltzeiten der Laser erreicht werden. Bevorzugt ist nicht ein kontinuierliches Verkippen des Scanstrahles (was aber nicht ausgeschlossen ist), sondern eine stufenweise Verkippung, so dass der Scanstrahl eine vorgegebene Zeit in jeder Zeile verbleibt. Ein solches stufenweises Verkippen kann beispielsweise durch verkippende Spiegel eines DMD oder ein scheibenförmiges holographisch optisches Element (HOE) erreicht werden, das, beispielsweise bei einer Ausdehnung von 720 Zeilen, in 720 Winkelelemente à 0,5° geteilt ist, die jeweils den Strahl unter einem leicht stärkeren Winkel als das vorhergehende Winkelelement ablenken, so dass der Laserstrahl die nächste Zeile des Spatial Light Modulators erreicht. Je nach Strahlengang kann man bei reflektiver Auslegung auch ein Spiegelrad verwenden. Wie bereits ausgeführt, findet bei jedem Zeilenwechsel ein synchroner Wechsel der Zeile des der Farbe zugeordneten Teilbildes und entsprechende Ansteuerung des Spatial Light Modulators statt.

In einer hinsichtlich der benötigten Gesamtbelichtungszeit vorteilhaften Variante eines Multiplexverfahrens wird im einzelnen wie folgt verfahren. Ein Scanstrahl bzw. Belichtungsbalken einer ersten Farbe, beispielsweise rot, befindet sich in einer Zeile a des Teilbildes (bezogen auf den Spatial Light Modulator). Gleichzeitig befindet sich ein Scanstrahl einer zweiten Farbe, beispielsweise grün, in einer Zeile a + n. Ein Scanstrahl einer dritten Farbe, beispielsweise blau, befindet sich in einer Zeile a + n + m. a, n und m sind natürliche Zahlen, n und m können gleich oder verschieden sein. Der Spatial Light Modulator wird in einem Bereich ± b um eine Zeile mit einem Teil eines der betreffenden Farbe eines Scanstrahles angesteuert, wobei b kleiner als n bzw. m ist. Im Beispiel umfasst der mit einem Teil des roten Teilbildes angesteuerte Bereich a ± b, der mit einem Teil des grünen Teilbildes angesteuerte Bereich a + n ± b und der mit einem Teil des blauen Teilbildes angesteuerte Bereich a + n + m ± b. Hierbei kann aber auch mit asymmetrischen Bereichen gearbeitet werden, i.e. + b1 und - b2, wobei b1 + b2 = 2b, und wobei b1 und b2 verschieden sind. Auch kann für verschiedene Farben mit verschiedenen (symmetrischen oder asymmetrischen) Bereichen bᵣ, b_{g}, b_{b} gearbeitet werden (der Index steht für eine Farbe). In jedem Fall ist wichtig, dass Bereiche verschiedener Farben unter Belichtung nicht überlappen. Eine Form mit asymmetrischen und für verschiedene Farben unterschiedlichen Bereichen ist in einem der folgenden Beispiele dargestellt.

In einer dritten, erfindungsgemäßen, Form erfolgt die Belichtung mit den Teilbildern simultan, wobei f Spatial Light Modulatoren eingerichtet sind, welche jeweils mit einer von f verschiedenen Farben bestrahlt werden, und wobei der i-te Spatial Light Modulator mit einem i-ten Teilbild angesteuert wird, welches der i-ten Farbe zugeordnet ist. Hierbei sind die Spatial Light Modulatoren so anzuordnen, dass Pixel verschiedener Spatial Light Modulatoren nicht überlappen. Dies kann beispielsweise durch einen Regelkreis realisiert werden, bei welchem z.B. eine CCD-Kamera das auf den Holographic Recordable Film belichtete Bild überwacht und bei Überlappungen von Pixeln eine Verschiebung eines oder mehrerer Laserstrahlen, beispielsweise mittels Parallelverschiebung von Ablenkspiegeln, mit der Maßgabe ansteuert, dass kein Pixelüberlapp für Pixel verschiedener Farben stattfindet. Bei der simultanen Belichtung kann für jede Farbe eine vollflächige Belichtung des zugeordneten Spatial Light Modulators erfolgen, es ist aber auch ein Scannen möglich.

Im Folgenden werden Beispiele näher erläutert.

### Beispiel 1: Sicherheitselement

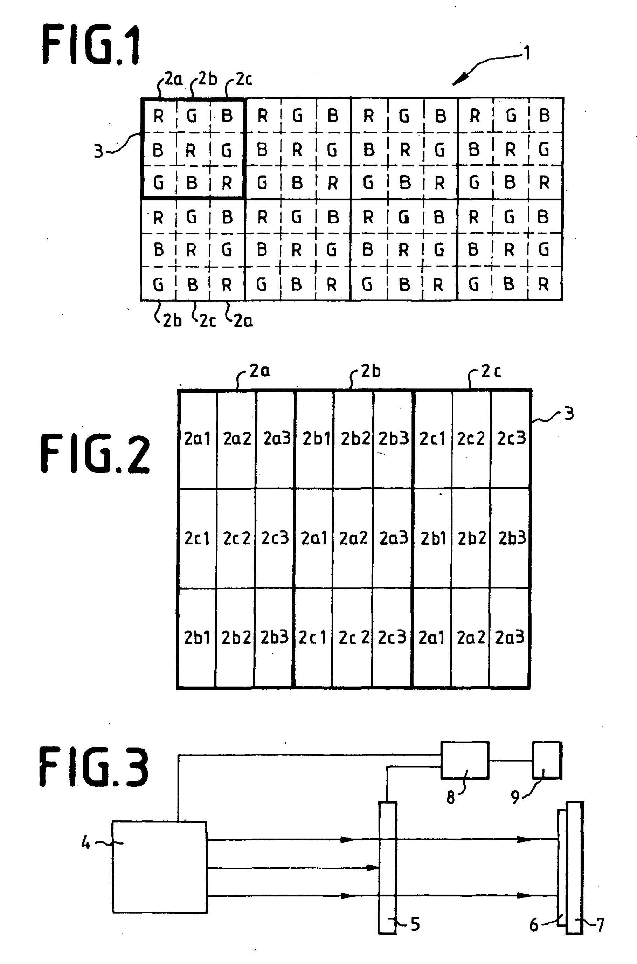

In der Figur 1 erkennt man einen stark vergrößerten Teilausschnitt aus einem Sicherheitselement 1. Das Sicherheitselement umfasst einen Holographic Recordable Film, in welchem ein mehrfarbiges zweidimensionales Bild in Form eines Hologramms gebildet ist. Das Bild ist durch Pixel 2a-c gebildet, wobei jedem Pixel 2a-c ausschließlich eine der Farben rot (R), grün (G) und blau (B) zugeordnet ist. Die tatsächliche Seitenlänge A eines Pixels beträgt im Beispiel 20 µm. Die Pixel 2a-c weisen entweder die zugeordnete Farbe (R,G,B) auf ("aktiv") oder es fehlt die betreffende Farbe ("inaktiv"). Je nach lateraler Verteilung aktiver und inaktiver Pixel entsteht bei Betrachtung durch das menschliche Auge und dessen mangelnder Fähigkeit die kleinen Pixel 2a-c aufzulösen ein farbiges Bild.

Man erkennt, dass die Pixel in einer sich periodisch in beiden Dimensionen wiederholenden 3 x 3 Matrix 3 angeordnet sind, wobei in jeder 3 x 3 Matrix 3 drei rote (R) Pixel 2a, drei grüne (G) Pixel 2b und drei blaue (B) Pixel eingerichtet sind. Die Verteilung der Pixel 2a-c innerhalb der Matrix 3 ist dergestalt, dass die drei roten (R) Pixel 2a die Diagonale der 3 x 3 Matrix 3 bilden und die drei grünen (G) Pixel 2b sowie die drei blauen (B) Pixel 2c in der 3 x 3 Matrix 3 mit der Maßgabe verteilt sind, dass jede Spalte und jede Reihe der 3 x 3 Matrix 3 jeweils ein rotes (R) Pixel 2a, ein grünes (G) Pixel 2b und ein blaues (B) Pixel 2c enthält.

In der Figur 2 erkennt man eine Variante, wobei an Stelle eines Pixels 2a-c der Figur 1 jeweils eine Submatrix 2a-c mit gleichfarbigen Pixeln eingerichtet ist. Jede Submatrix 2a-c weist jeweils drei gleichfarbige Pixel 2a1, 2a2, 2a3, 2b1, 2b2, 2b3, 3c1, 2c2, 2c3 auf. Wenn dann beispielsweise verschiedene Pixel 2a1, 2a2, 2a3 einer Submatrix 2a aktiviert (farbig mit einer bestimmten Beugungseffizienz, beispielsweise der maximalen Beugungseffizienz) oder deaktiviert sind, können verschiedene Helligkeitsstufen der roten (R) Submatrix 2a realisiert werden, im Beispiel 4 Stufen. Entsprechendes gilt für die Pixel 2b1, 2b2, 2b3, 3c1, 2c2, 2c3 der grünen (G) Submatrices 2b,c.

Die drei Pixel 2a1, 2a2, 2a3, 2b1, 2b2, 2b3, 3c1, 2c2, 2c3 einer jeden Submatrix 2a-c sind nebeneinander liegende Quader, deren Seitenverhältnis im wesentlichen A : A/3 beträgt, wobei alle Pixel 2a1, 2a2, 2a3, 2b1, 2b2, 2b3, 3c1, 2c2, 2c3 gleich orientiert sind. Diese Anordnung hat die im allgemeinen Teil der Beschreibung angegebenen Vorteile.

Bei dem Beispiel der Figur 2 handelt es sich um eine 9 x 3 Matrix.

### Beispiel 2: Vorrichtung zur Herstellung eines Sicherheitselementes

In der Figur 3 erkennt man eine Lichtquelle 4 für kohärentes Licht, einen Spatial Light Modulator 5, beispielsweise ein schwarz/weiss-LCD 5, einen Holographic Recordable Film 6 und ein Master Hologramm 7. Die Lichtquelle 4 ist dafür eingerichtet, zugleich oder nacheinander Punktstrahlehoder Linienstrahlen auf den Spatial Light Modulator 5 zu werfen, oder diesen vollflächig zu beleuchten. Hierbei wird jedes Pixel des Spatial Light Modulators stets nur mit einer einzigen Farbe beleuchtet. Die Steuerung der Lichtquelle 4 in Hinblick auf Farbe, Form und Richtung bzw. Verlauf eines emittierten Lichtstrahles bzw. Strahlenbündels erfolgt mittels einer Steuerungseinheit 8. Dabei werden einzelne nicht dargestellte Laser nach Maßgabe der Steuerung ein- bzw. ausgeschaltet bzw. deren Strahl umgelenkt bzw. abgeschattet. Die Ausbildung und Anpassung des internen Aufbaus der Lichtquelle 4 an das konkrete gewünschte Herstellungsverfahren im Einzelnen ist für den Fachmann einfach und bedarf nicht der näheren Erläuterung.

Der Spatial Light Modulator 5 ist ebenfalls an die Steuerungseinheit 8 angeschlossen. Schließlich weist die Steuerungseinheit 8 ein Interface 9 auf, über welches ein in ein Hologramm unzuwandelndes Bild, beispielsweise ein Passbild eingespeist werden kann.

In der Steuerungseinheit 8 erfolgt eine Prozessierung eines eingegebenen Bildes und eine synchrone Steuerung der Lichtquelle 4 und des Spatial Light Modulators 5, wie im allgemeinen Teil der Beschreibung in vielen Varianten beschrieben.

### Beispiel 3: ein Multiplexverfahren zur Herstellung eines Sicherheitselementes

Die Teilfiguren 4a-d stellen eine zeitliche Abfolge dar, welche von t = t1 bis t = t4 durchlaufen wird.

Man erkennt jeweils eine Aufsicht auf einen Spatial Light Modulator 5 zusammen mit Scanstrahlen 10R (rot), 10G (grün) und 10B (blau). Man erkennt jeweils Bereiche b_{R}, in welchen der Spatial Light Modulator 5 mit einem roten Teilbild angesteuert ist, Bereiche b_{G}, in welchen der Spatial Light Modulator 5 mit einem grünem Teilbild angesteuert ist, und b_{B}, in welchen der Spatial Light Modulator 5 mit einem blauen Teilbild angesteuert ist. Die Bereiche b_{R}, b_{G} und b_{B} sind durch die Scanstrahlen 10R, 10G, 10B jeweils in Teilbereiche b_{R1}, b_{R2} bzw. b_{G1}, b_{G2} bzw. b_{B1}, b_{B2} unterteilt.

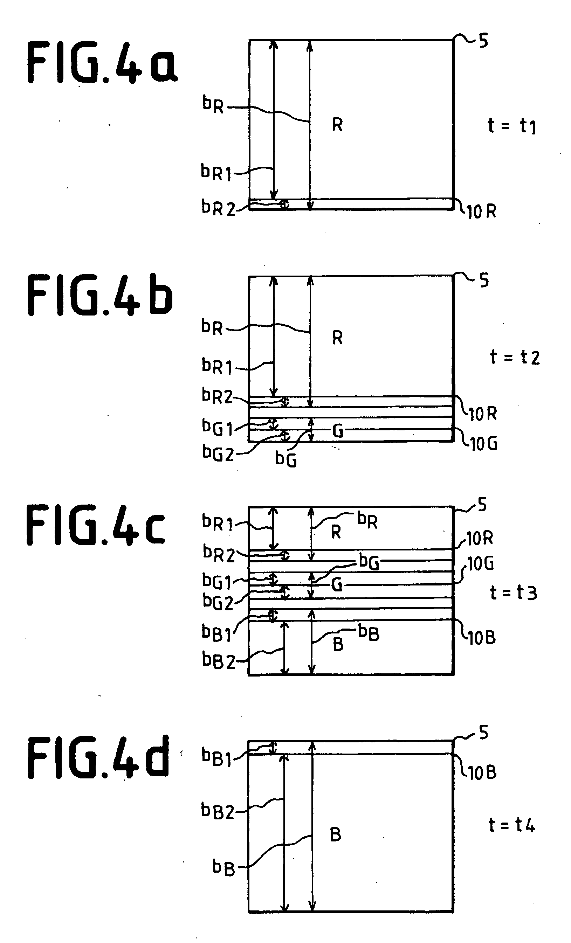

Beginnend bei t = t1 (Fig. 4a) erkennt man, dass der rote Bereich b_{R} sich über den gesamten Spatial Light Modulator 5 erstreckt. Der rote Scanstrahl 10R befindet sich unmittelbar am unteren Rand des Spatial Light Modulators 5.

Bei t = t2 (Fig. 4b) ist der rote Scanstrahl 10R nach oben gewandert. Der rote Teilbereich b_{R1} hat sich entsprechend verkleinert, während der rote Teilbereich b_{R2} unverändert, bezogen auf die Position des roten Scanstrahles 10R, ist. Es hat sich zudem ein grüner Bereich b_{G} im unteren Bereich des Spatial Light Modulators 5 gebildet, in welchem ein grüner Scanstrahl 10G einstrahlt. Die grünen Teilbereiche b_{G1} und b_{G2} sind gleich.

Bei t = t3 (Fig. 4c) ist der rote Scanstrahl 10R noch weiter nach oben gewandert. Der rote Teilbereich b_{R1} hat sich entsprechend weiter verkleinert, während der rote Teilbereich b_{R2} unverändert, bezogen auf die Position des roten Scanstrahles 10R, ist. Der grüne Bereich bG ist im Gleichschritt mit den roten und grünen Scanstrahlen 10R, 10G nach oben gewandert, wobei die grünen Teilbereiche b_{G1} und b_{G2} unverändert, bezogen auf die Position des grünen Scanstrahles 10G, geblieben sind. Es hat sich schließlich ein blauer Bereich b_{G} im unteren Bereich des Spatial Light Modulators 5 gebildet, in welchem ein blauer Scanstrahl 10B einstrahlt. Die blauen Teilbereiche b_{B1} und b_{B2} sind (zunächst) gleich.

Bei t = t4 (Fig. 4d) haben der rote Scanstrahl 10R und der grüne Scanstrahl 10g den Spatial Light Modulator 5 nach oben verlassen und entsprechend auch der rot Bereich b_{R} und der grüne Bereich b_{G}. Die Anordnung des blauen Scanstrahles 10B und des blauen Bereiches b_{B} entspricht einer spiegelsymmetrischen Darstellung der Figur 4a.

In allen Phasen der Figuren 4a bis 4d ist der Spatial Light Modulator 5 so angesteuert worden, dass einzelne Pixel stets nur für Licht einer einzigen zugeordneten Farbe durchlässig sein können. In der Figur 4a sind beispielsweise Pixel für grün und blau alle auf undurchlässig gesteuert, während die Pixel für rot mit dem roten Teilbild angesteuert sind. Entsprechendes gilt für die weiteren Figuren.

## Patentansprüche

1. Verfahren zur Herstellung eines holographischen Sicherheitselementes (1) für ein Sicherheits- und/oder Wertdokument
mit einem Holographic Recordable Film (6), in welchem ein mehrfarbiges zweidimensionales Muster in Form eines Hologramms gebildet ist, wobei das Muster durch Pixel (2a-c) gebildet ist, wobei jedem Pixel (2a-c) ausschließlich eine von f verschiedenen Farben, insbesondere im Sichtbaren (R,G,B), IR oder UV, zugeordnet ist, und wobei ein jedes Pixel (2a-c) entweder die Farbe oder keine Farbe aufweisen kann, wobei die Farbzuordnung der Pixel (2a-c) eine sich periodisch in beiden Dimensionen wiederholende n x n oder n x m Matrix (3) ist, wobei n und m unabhängig voneinander 2 bis 20 betragen können, und wobei in jeder n x m Matrix zumindest jeweils ein Pixel einer Farbe aus der Gruppe aller f verschiedenen Farben angeordnet ist,
mit den folgenden Verfahrensschritten:
a) ein farbiges Muster wird in eine zweidimensionale Matrix aus Pixeln (2a-c) transformiert, wobei jedem Pixel (2a-c) ausschließlich eine der f verschiedenen Farben zugeordnet ist,
b) aus der zweidimensionalen Pixelmatrix werden f Teilbilder erzeugt, wobei jedes Teilbild zumindest zwei Referenzpixel aufweist, welche in verschiedenen Teilbildern stets deckungsgleich sind, und wobei jedes Teilbild nur eine der f verschiedenen Farben aufweist,
c) die f Teilbilder aus der Stufe b) werden in Modulatorsignale für f verschiedene Spatial Light Modulatoren (5) transformiert,
d) ein Holographic Recordable Film (6) wird über einen Holographie-Master (7) durch Zwischen-Schaltung der mit den Signalen aus Stufe c) modulierten f Spatial Light Modulatoren (5) mit den Teilbildern belichtet, wobei die Belichtung für jedes Teilbild mit kohärentem Licht der dem Teilbild zugeordneten Farbe erfolgt, und wobei die Referenzpixel aller Teilbilder deckungsgleich abgebildet werden.

2. Verfahren nach Anspruch 1, wobei jedes Teilbild drei Referenzpixel aufweist.

3. Verfahren nach Anspruch 1 oder 2, wobei die Belichtung mit den Teilbildern in einem Scan-Verfahren erfolgt.

4. Verfahren nach einem der Ansprüche 1 oder 2, wobei die Belichtung mit den Teilbildern simultan erfolgt.

## Claims

1. A method for producing a holographic security element (1) for a security and/or value document, comprising a holographic recordable film (6), in which a multi-colored two-dimensional pattern in the form of a hologram is formed, the pattern being formed by pixels (2a-c), to each pixel (2a-c) being exclusively assigned one of f different colors, in particular in the visible (R, G, B), IR or UV ranges, and each pixel (2a-c) having either the color or no color, the color assignment of the pixels (2a-c) being a n x n or n x m matrix (3) periodically repeating in two dimensions, wherein n and m may independently from each other be from 2 to 20, and in each n x m matrix at least one pixel of one color from the group of all f different colors being arranged, comprising the following steps:
a) a colored pattern is transformed into a two-dimensional matrix of pixels (2a-c), wherein to each pixel (2a-c) is exclusively assigned one of the f different colors,
b) from the two-dimensional matrix of pixels are generated f partial images, wherein each partial image comprises at least two reference pixels that are always congruent in different partial images, and wherein each partial image has only one of the f different colors,
c) the f partial images of step b) are transformed into modulator signals for f different spatial light modulators (5),
d) a holographic recordable film (6) is exposed via a holography master (7), by interposing the f spatial light modulators (5) modulated with the signals of step c), by the partial images, wherein the exposure occurs for each partial image with coherent light of the color assigned to the partial image, and wherein the reference pixels of all partial images are imaged in a congruent fashion.

2. The method according to claim 1, wherein each partial image includes three reference pixels.

3. The method according to claim 1 or 2, wherein the exposure by the partial images occurs in a scan process.

4. The method according to one of claims 1 or 2, wherein the exposure by the partial images occurs simultaneously.

## Revendications

1. Procédé de fabrication d'un élément de sécurité holographique (1) pour un document de sécurité et/ou de valeur,
comprenant une voile enregistrable holographique (6), dans laquelle un motif polychrome bidimensionnel sous la forme d'un hologramme est formé, le motif étant formé par des pixels (2a-c), à chaque pixel (2a-c) étant exclusivement associée une de f couleurs différentes, en particulier dans le domaine du visible (R, G, B), d'IR ou d'UV, et chaque pixel (2a-c) pouvant avoir la couleur ou bien pas de couleur, l'association de couleur des pixels (2a-c) étant une matrice (3) n x n ou n x m se répétant périodiquement en deux dimensions, n et m pouvant indépendamment être de 2 à 20, et dans chaque matrice n x m, au moins un pixel d'une couleur à partir du groupe de toutes les f couleurs différentes est disposé,
comprenant les étapes suivantes:
a) un motif coloré est transformé en une matrice bidimensionnelle de pixels (2a-c), à chaque pixel (2a-c) étant exclusivement associée une des f couleurs différentes,
b) à partir de la matrice bidimensionnelle de pixels sont générées f images partielles, chaque image partielle comprenant au moins deux pixels de référence qui sont toujours coïncidents dans des images partielles différentes, et dans laquelle chaque image partielle a seulement une des f couleurs différentes,
c) les f images partielles de l'étape b) sont transformées en des signaux de modulation pour f modulateurs spatiaux de lumière (5) différents,
d) une voile enregistrable holographique (6) est exposée par l'intermédiaire d'un maître d'holographie (7), par l'intermédiaire des f modulateurs spatiaux de lumière (5) modulés avec les signaux de l'étape c), par les images partielles, l'exposition ayant lieu pour chaque image partielle avec de la lumière cohérente de la couleur associée à l'image partielle, et les pixels de référence de toutes les images partielles étant mis en image de façon coïncidente.

2. Procédé selon la revendication 1, dans lequel chaque image partielle comporte trois pixels de référence.

3. Procédé selon la revendication 1 ou 2, dans lequel l'exposition par les images partielles a lieu dans un procédé de scan.

4. Procédé selon une des revendications 1 ou 2, dans lequel l'exposition par les images partielles a lieu simultanément.
